(19) Europäisches Patentamt
European Patent Office
Office européen des brevets

(11) Numéro de publication: **0 165 081**
**B1**

(12)
# FASCICULE DE BREVET EUROPÉEN

(45) Date de publication du fascicule du brevet: **04.01.89**

(51) Int. Cl.⁴: **H 04 N 7/137**

(21) Numéro de dépôt: **85400641.8**

(22) Date de dépôt: **01.04.85**

(54) **Procédé et système de compression de débit de données numériques transmises entre un émetteur et un récepteur de télévision.**

(30) Priorité: **03.04.84 FR 8405230**

(43) Date de publication de la demande: **18.12.85 Bulletin 85/51**

(45) Mention de la délivrance du brevet: **04.01.89 Bulletin 89/1**

(84) Etats contractants désignés: **DE GB NL**

(56) Documents cité:
**GB-A-2 003 001**
**US-A-3 761 613**
**US-A-4 144 543**
**US-A-4 217 609**
**US-A-4 371 895**

**IEEE TRANSACTIONS ON COMMUNICATIONS, vol. COM-31, no.8, août 1983, pages 1003-1017, IEEE, New York, US; I.J. DUKHOVICH: "A DPCM system based on a composite image model"**

(73) Titulaire: **THOMSON- CSF, 173, Boulevard Haussmann, F-75379 Paris Cédex 08 (FR)**

(72) Inventeur: **Mischler, Denis, THOMSON- CSF SCPI 173, bld Haussmann, F-75379 Paris Cedex 08 (FR)**
Inventeur: **Catros, Jean- Yves, THOMSON- CSF SCPI 173, bld Haussmann, F-75379 Paris Cedex 08 (FR)**

(74) Mandataire: **Lincot, Georges, THOMSON- CSF SCPI 19, avenue de Messine, F-75008 Paris (FR)**

**EP 0 165 081 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé et un système de compression de débit de données numériques transmises entre un émetteur et un récepteur de télévision.

En télévision numérique, les signaux de luminance et de différence de couleur sont numérisés à huit éléments binaires par point, avec une structure et une fréquence d'échantillonnage qui dépendent du problème traité. Ces informations sont généralement transmises en temps réel avec un débit brut très élevé, supérieur à 140 mégabits par seconde, ce qui impose de réduire ce débit pour pouvoir emprunter les supports de transmission existants, en utilisant la forte redondance de ces informations.

On connaît différents procédés et dispositifs de réduction de débit, parmi ceux-ci les procédés de codage par modulation d'impulsions codées différentielles sont particulièrement intéressants du fait de leur simplicité de réalisation. Les procédés de codage différentiel connus consistent à coder la différence entre la valeur d'un échantillon du signal à transmettre et une estimation, ou prédiction calculée à partir des valeurs des échantillons précédents déjà codés, cette différence étant quantifiée par un quantificateur à n niveaux de quantification. A chaque niveau i est associé un code Ci qui est transmis sur la ligne ou le canal de transmission. Le code reçu est transforme en sa valeur réelie pour être ensuite additionné à une valeur de prédiction calculée par le récepteur afin de reconstituer le signal. Une boucle de contre-réaction permet de réaliser au niveau de l'émetteur une prédiction identique à celle qui est élaborée au récepteur.

Les systèmes mettant en oeuvre ces procédés présentent d'autant plus d'intérêt que les données transmises sont constituées par des mots de code binaire de longueur fixe et que le codage mis en oeuvre est un codage spatial, c'est-à-dire un codage qui ne prend en compte que les états des points géographiquement voisins de chaque point à coder appartenant à la même trame d'image que le point à coder. En effet, l'usage de mots de code à longueur fixe élimine les problèmes de qestion des mémoires tampons nécessaires à l'adaptation d'un débit variable de la source au débit fixe du canal reliant l'émetteur au récepteur et, le codage spatial permet d'éviter l'emploi systématique de mémoire d'image.

Toutefois, ces systèmes ne peuvent être utilisés pour la transmission d'image de télévision lorsque les débits deviennent inférieurs à quatre éléments binaires par point transmis car, en-dessous de cette valeur, la qualité de l'image reconstituée au niveau des récepteurs n'est plus acceptable. D'autre part, un codage, par exemple, à trois éléments binaires par point, entraîne l'utilisation de niveaux de quantification espacés rendant difficile la restitution de l'image au niveau du récepteur à la fois pour les points de celle-ci contenus dans les zones uniformes que pour ceux contenus dans les zones à contours ou fortement texturées. On constate en effet, que dans les zones uniformes de l'image, les faibles variations de luminance sont directement perçues par l'oeil et qu'il est préférable, pour pallier ce défaut, de quantifier le signal de luminance des zones uniformes à l'aide de quantificateurs ayant des niveaux resserrés, de façon à ne pas amplifier exagérement les faibles variations de luminance qui pourraient laisser apparaître de faux contours au voisinage de l'erreur de prédiction nulle. Par contre, une quantification à l'aide de niveaux de reconstruction espacés apparaît mieux adaptée au codage des points situés dans les zones à contours. Toutefois, dans ce deuxième cas l'espacement entre deux niveaux ne peut dépasser une certaine limite au-delà de laquelle, les contours apparaissent restitués sous forme de paliers ou de marches d'escalier.

Pour resoudre ces difficultés, un procédé connu consiste à commuter les quantificateurs sur deux caractéristiques de quantification différentes en fonction de l'aspect local du point de l'image à transmettre. Par exemple, pour des points situés dans des zones uniformes de l'image, le codage est effectué à l'aide d'un quantificateur à niveau de reconstruction resserre au voisinage de l'erreur de prédiction nulle, et pour des points situés dans des zones à contours ou texturées de l'image, un quantificateur à niveau de reconstruction élevé est utilisé. Mais ce procédé pose encore le problème de la réalisation des dispositifs de réception qui doivent reconnaître les instants de changement de caractéristiques de quantification et/ou de prédiction opérés par l'émetteur.

Si la commutation des caractéristiques de quantification s'effectue sur des points non connus du récepteur constituant un voisinage non causal pour les points d'image à décoder, il est nécessaire que l'émetteur indique au récepteur les indications de changement de caractéristiques de quantification et/ou de prédiction. Dans ce cas, même si un code a longueur fixe est utilisé pour coder les erreurs de prédiction quantifiée, le débit de chaque ligne d'image est variable ce qui pose des problèmes complexes de qestion des mémoires tampons pour adapter le débit variable de l'émetteur au débit fixe du canal de transmission.

Par contre, si l'indication de changement de caractéristiques de quantification et/ou de prédiction n'est pas transmise au récepteur, le changement de caractéristique est obtenu de façon identique à l'émetteur et au récepteur à partir de tests qui sont effectués sur des points de l'image déjà connus du récepteur qui constituent le voisinage causal du point à décoder. Dans ces conditions, si un code à longueur fixe est utilise, le débit de chaque ligne d'image est constant puisque la seule information à transmettre est la valeur de l'erreur de prédiction quantifiée. Un problème se pose cependant, lorsque dans certains cas, un voisinage causal ne permet pas à lui seul de trouver la meilleure caractéristique du quantificateur ou des prédicteurs à utiliser. Ce problème se pose tout particulièrement lorsque les points de l'image à quantifier se trouvent dans une zone de transition séparant une zone uniforme d'une zone a contours de l'image et que cette zone uniforme se déplace à l'intérieur de l'image.

Le but de l'invention est de pallier les inconvénients précités.

A cet effet, l'invention a pour objet un procédé de compression de débit de données numériques transmises

entre au moins un emetteur et un récepteur de télévision, les données étant représentatives des valeurs de luminance et/ou de chrominance de chaque point d'une image de télévision et étant codées à l'émetteur par un dispositif de codage différentiel du type comprenant au moins un prédicteur, un quantificateur, un dispositif de reconstruction de la donnée transmise et un allocateur de code et décodées au récepteur par un décodeur différentiel comprenant au moins un transformateur de code, un prédicteur et un dispositif de reconstruction de la donnée transmise, le procédé consistant à coder les données relatives à chaque point courant a transmettre à l'aide d'un premier prédiceur et d'un premier quantificateur lorsque le point appartient à une zone à contours, à coder les données relatives à chaque point d'une zone uniforme ou faiblement texturée à l'aide d'au moins un deuxième prédicteur et d'un deuxième quantificateur, et à décoder au récepteur chaque donnée codée reçue à l'aide d'une caractéristique de prédiction identique a celle qui a été utilisée à l'émetteur pour coder le code de la donnée reçue, caractérisé en ce qu'il consiste à comparer les erreurs de prédiction de chaque prédicteur de l'émetteur et du récepteur à au moins une valeur de seuil d'erreur prédéterminée pour coder à l'émetteur les données du point courant à l'aide de mots de codes différents de longueur fixe, suivant que les résultats des comparaisons des erreurs de prédiction des points voisins du point courant déjà transmises au récepteur indiquent que le point est dans une zone à contours ou dans une zone uniforme et pour commuter le récepteur sur un prédicteur qui a la même caractéristique de prédiction que le prédicteur qui a été utilisé pour coder la donnée du point courant à l'émetreur.

L'invention a également pour objet un système de compression de débit de données numériques entre un émetteur et au moins un récepteur de télévision faisant application du procédé précité.

D'autres caractéristiques et avantages de l'invention apparaîtront également à l'aide de la description faite au regard des dessins annexes donnés uniquement à titre d'exemple et dans lesquels:

- La figure 1 représente un système de compression de débit de données numeriques transmises entre un émetteur et un récepteur mettant en oeuvre un dispositif connu de codage-décodage différentiel.
- La figure 2 est un organigramme illustrant les phases de commutation des structures de codage selon l'invention.
- La figure 3 représente une caractéristique de quantification adaptée au codage des points situés dans les zones à contours ou fortement texturées de l'image.
- La figure 4 est une représentation d'une caractéristique de quantification adaptée au codage des points situés dans des zones uniformes de l'image.
- La figure 5 représente l'organisation d'une fenêtre de points répartis à proximité d'un point courant analysé à l'intérieur d'une trame d'image de télévision et sur lesquels portent les tests intra-trame.
- La figure 6 représente l'organisation d'une fenêtre de points composés de points inter-trame géographique ment disposés sur deux trames consécutives juxtaposées, à proximité du point courant analyse dans l'image de télévision, cette fenêtre étant utilisée pour le calcul des valeurs de prédiction temporelle inter-trame.
- La figure 7 est un schéma illustrant le principe de réalisation d'un codeur ou d'un décodeur selon l'invention.
- La figure 8 est un schéma de réalisation détaillé d'un codeur ou d'un décodeur représenté à la figure 7.
- La figure 9 est un schéma représentant les détails de réalisation du dispositif de réalisation de la figure 7.

Le système connu de codage-décodage différentiel représenté à la figure 1 est constitué, du côté émetteur par un dispositif de codage différentiel 1, représenté à l'intérieur d'un rectangle en pointillés et, du côté récepteur, par un dispositif de décodage différentiel 2, représenté également à l'intérieur d'un rectangle en pointillés. La sortie du dispositif de codage 1 est reliée à l'entrée du dispositif de décodage 2 par l'intermédiaire d'un canal de transmission 3. Le dispositif de codage différentiel 1 comprend un prédicteur 4, un quantificateur 5, un dispositif de reconstruction transmise 6, ainsi qu'un allocateur de code 7. La donnée X à transmettre est appliquée à l'entrée d'un soustracteur 8 dont l'autre entrée est reliée à la sortie du prédicteur 4. Le prédicteur 4 délivre une valeur de prédiction P. La donnée à coder X diminuée de la valeur de prédiction P est appliquée sous la forme de la différence $d = X - P$ à l'entrée du quantificateur 5, par la sortie du soustracteur 8, pour être quantifiée selon n niveaux. A chaque niveau i de quantification, l'allocateur de code 7 associe un code Ci qui est transmis sur la ligne ou le canal 3. Le niveau de de quantification délivrés par le quantificateur 5 et qui correspond à la différence ou erreur de prédiction X - P, est applique à l'entrée du dispositif de reconstruction de la donnée transmise 6, généralement constituée par un additionneur, dont l'autre entrée est reliée à la sortie du prédicteur 4. La donnée reconstruite Xre transmise à la sortie du dispositif de reconstruction de la donnée transmise 6, est appliquée à l'entrée du prédicteur 4. Le code Ci est reçu par le dispositif de décodage 2 qui est constitué par un transformateur de code 9, un prédicteur 10 et un dispositif de reconstruction de la donnée reçue 11. Le transformateur de code 9 reconstitue les niveaux de quantification dq pour les appliquer à une première entrée du dispositif de reconstruction de la donnée reçue 11. Le dispositif de reconstruction de la donnée reçue 11, généralement constitué par un additionneur, reçoit sur une autre entrée la valeur de la prédiction P' calculée par le prédicteur 10 et délivre sur sa sortie la valeur Xrr de la donnée reconstruite reçue.

L'opération de quantification effectuée par le quantificateur 5 permet d'associer à toutes les valeurs des différences X - P comprises entre deux seuils Si et Si + 1 une valeur unique de code ci cette opération effectuée avec le concours de l'allocateur de code 7 permet en codage différentiel de réaliser la réduction de débit. Dans le cas où il n'y a pas d'erreur de transmission, et si les fonctions de prédiction des prédicteurs 4 et

10 sont les mêmes à l'émetteur et au récepteur, les valeurs reconstruites respectivement Xre et Xrr à l'émetteur et au récepteur sont identiques.

Le procédé et le système selon l'invention mettent en oeuvre un système de codage différentiel conforme à celui qui est décrit à la figure 1, à la différence toutefois, qu'ils utilisent plusieurs structures de codage composées de prédicteurs et de quantificateurs de caractéristiques différentes, chacune de ces structures étant utilisée en fonction de l'environnement local de chaque point d'image à coder. Par exemple, pour créer des zones a contours ou fortement texturées de l'image avec une caractéristique de prédiction intra-image unique, un quantificateur ayant des niveaux de reconstruction notablement espacés est utilisé. Par contre dans les zones uniformes ou faiblement texturées, les caractéristiques de quantification utilisées comprennent des niveaux de reconstruction nettement plus resserres au voisinage de l'erreur de prédiction nulle. Un prédicteur temporel inter-trame prenant en considération l'état de plusieurs points situés dans des trames différentes est également utilisé pour les points situés dans les zones uniformes immobiles de l'image et un prédicteur spatial intra-trame ne prenant en considération que les états des points de l'image localisés à l'intérieur de chaque trame, est mis en oeuvre pour coder des points situés dans les zones uniformes en mouvement de l'image. Un dispositif de commutation entre chacune de ces structures permet, une commutation sur la caractéristique de codage qui est la plus appropriée, en fonction de l'allure locale des points de l'image entourant chaque point courant à coder. L'indication de changement de structure de codage est élaborée de manière identique à l'émetteur et au récepteur à partir des tests sur les points connus du récepteur et des points déjà codés par l'émetteur de sorte qu'il n'est pas nécessaire de transmettre sur le canal de transmission reliant l'émetteur au récepteur l'indication de changement de structure de codage.

Afin de n'introduire aucune information supplémentaire, le critère de commutation élabore son choix en exploitant les caractéristiques des points de l'image déjà connus du récepteur. Deux tests successifs illustrés par l'organigramme de la figure 2, permettent de distinguer l'appartenance des points de l'image à trois types ou classes de zones. L'ordre des tests qui est défini à la figure 2, consiste à examiner lors d'un premier test, effectué à l'étape 13, sur chaque point courant saisi à l'étape 12, l'appartenance de ce point ou sa non-appartenance à une zone à contours importants ou fortement texturée de l'image. Si à l'étape 13, le test révèle que le point courant appartient à une zone a contours importants ou fortement texturée, les circuits du codeur et du décodeur sont commutés à l'étape 14 sur des structures de codage comportant une caractéristique de quantification ayant des niveaux de reconstruction notablement espacés et sur un prédicteur intra-trame dont la caractéristique de prédiction ne fait intervenir que les points voisins du point courant examiné. Par contre, si à l'étape 13 le point est déclaré ne pas appartenir à une zone à contours importants ou fortement texturée de l'image, un second test est effectué à l'étape 15 qui consiste à s'assurer de l'état mobile ou immobile de la zone auquel appartient le point courant de l'image analysée. Si à l'étape 15, la zone uniforme dans laquelle est compris le point courant est déclarée immobile, les circuits du codeur et du décodeur sont commutés à l'étape 16 sur une structure de codage particulière composée, d'un quantificateur ayant une caractéristique de quantification possédant des niveaux de reconstruction nettement plus resserrés au voisinage de l'erreur de prédiction nulle et d'un prédicteur ayant une caractéristique de prédiction inter-trame prenant en compte les points voisins du point homologue du point courant dans la trame d'image précédente. Si par contre, à l'étape 15, la zone uniforme dans laquelle se trouve située le point courant analysé est déclarée en mouvement, une structure de codage comportant un quantificateur à caractéristique de quantification possèdant des niveaux de reconstruction resserres et un prédicteur comportant une caractéristique de prédiction intra-trame sont utilisés (étape 17). Cette double commutation des structures de codage permet de dissocier dans l'image trois classes de zones, une première classe étant constituée par les zones à contours importants fixes ou mobiles et détectées au cours du test effectué à l'étape 13, une deuxième classe étant constituée par les zones uniformes ou à petits contours fixes et enfin une troisième classe constituée par les zones uniformes à petits contours mobiles dont la détection est effectuée par les tests de l'étape 15.

La figure 3 représente une caractéristique de prédiction spécialement adaptée pour le codage les points situés dans les zones à contours ou fortement texturées de l'image.

Cette caractéristique est linéaire et est définie par un réseau de droites parallèles, dans un système de coordonnées rectangulaire portant sur l'axe des abscisses les valeurs de prédiction $P_i$ et sur l'axe des ordonnées les erreurs de prédiction $d(n,P_1) = X - P_i$, chaque droite du réseau étant définie par la relation d(n) $P_i - k P_i + B_n$

k étant un entier naturel inférieur ou égal à 1.

n représentant le code alloué en fonction du niveau de prédiction

$P_i$ et de l'erreur de prédiction $X - P_i$ et $B_n$ représentant l'erreur de prédiction pour le niveau de prédiction nulle. Dans un mode particulier de réalisation de l'invention une valeur de k voisine de 0,47 avec 8 niveaux de quantification pourront être choisis pour coder chaque erreur de prédiction sur une longueur binaire de 3 bits.

La figure 4 représente la caractéristique de quantification utilisée pour coder des points appartenant aux zones uniformes de l'image, il s'agit d'une caractéristique à 8 niveaux dont les niveaux sont resserrés au voisinage de l'erreur de prédiction X - Pi nulle.

Parmi les tests effectués aux étapes 13 et 15 du procédé précité, le premier test effectué à l'étape 13 apparaît le plus critique et son efficacité se mesure à la finesse du suivi des contours ou des zones fortements texturées de l'image. Un retard de commutation des structures de codage provoqué par le passage d'une zone uniforme vers une zone à contours entraîne une restitution déchiquetée des contours et un retard de commutation de ces mêmes structures lors du passage d'une zone à contours vers une zone uniforme entraîne

l'apparition d'un bruit granulaire dans les zones uniformes qui suivent les contours. Ces retards peuvent être minimisés par un choix judicieux des paramètres de définition des critères de commutation des structures de codage, ce choix portant à la fois sur la définition d'une fenêtre de points entourant chaque point courant analysé et à l'intérieur de laquelle doit s'appliquer le test, ainsi que sur la façon dont le test lui-même est effectué. Une fenêtre F1 de points qui donne de bons résultats est représentée à la figure 5, elle se compose du point courant X situé à proximité de points voisins A, B, C, D, les points A et X étant situés sur la même ligne de balayage de l'image et les points B, C, D étant situés dans cet ordre sur la ligne de balayage précédente, les points B et C étant disposés respectivement à la verticale des points A et X. Le test de l'étape 13 s'effectue en déterminant la plus grande des erreurs de prédiction EPn intra-image reconstruite sur la fenêtre F de la figure 5, chaque erreur de prédiction reconstruite étant déterminée en calculant la différence entre la valeur de luminance du point reconstruit et la prédiction intra-image reconstruite concernant ce point. S'il apparaît que la plus grande des erreurs EPn est inférieure à un seuil déterminé S la zone entourant le point X analysé est déclarée être une zone uniforme ou à petits contours. Par contre si la plus grande des erreurs de prédiction EPn est supérieure au seuil déterminé S, la zone entourant le point X analysé est déclarée être une zone à contours ou fortement texturée de l'image.

Le second test effectué à l'étape 15 se fait d'une façon moins critique, son principe est similaire à celui choisi pour effectuer le test précédent à la différence toutefois que ce n'est plus l'erreur de prédiction intra-image maximum sur la fenêtre F1, mais une erreur de prédiction maximale temporelle inter-image sur une fenêtre temporelle F2, non représentée, qui est calculée, la fenêtre temporelle F2 étant composée à la fois par des points de la trame courante voisins du point courant analysé et par des points homologues ou non de la trame précédente. Cette erreur de prédiction temporelle maximale est obtenue en mesurant la plus grande des erreurs de prédiction temporelle des valeurs de chaque point reconstruit sur la fenêtre temporelle F2 chaque erreur de prédiction temporelle étant égale à la valeur de luminance du point reconstruit moins sa prédiction temporelle reconstruite. Si la valeur maximale des erreurs de prédiction temporelle mesuree est inférieure à un seuil déterminé S', la zone correspondant au point analysé est déclarée immobile et uniforme. Par contre, si la valeur maximum E'Pn des erreurs de prédiction temporelle mesurée est supérieure au seuil déterminé S', la zone correspondante est déclarée mobile et uniforme. Pour des comme dités de réalisation, le second test pourra être effectué de préférence avec une fenêtre F2 constituée de points dans chaque trame identique à la fenêtre F1 représentée à la figure 5 et qui a servi au premier test.

Dans les calculs tous les points à l'intérieur des fenêtres précédemment décrites ne sont pas obligatoirement tous pris en considération. Par exemple, le prédicteur des structures de codage des étapes 14 et 17 pourra ne prendre en compte que les points A et C de la fenêtre de la figure 5, s'il a une structure d'opérateur lui permettant d'effectuer la moyenne arithmétique des valeurs reconstruites Xre des valeurs de luminance de chaque point A et C, le point A étant le point qui précède le point X courant sur la même ligne et le point C étant le point homologue du point courant sur la ligne précédente d'analyse de l'image. Egalement le prédicteur inter-trame de la structure de codage mise en oeuvre à l'étape 16 pourra être constitué par un prédicteur temporel pur ne prenant en compte que les valeurs reconstruites des points d'image A', B', C' et D' de la trarne précédente entourant le point courant analysé et la valeur reconstruite du point C de la trame courante constituée par le point homologue du point courant situé sur la ligne de balayage précédente. La fenêtre F3 utilisée pour calculer la prédiction temporelle inter-trame est représentée à la figure 6.

Un schéma de principe d'un dispositif pour la mise en oeuvre du procédé selon l'invention est décrit ci-après à l'aide du schéma de la figure 7 qui représente une structure applicable à la fois au dispositif d'émission et de réception du système de codage différentiel selon l'invention, les structures communes propres aux dispositifs d'émission et de réception étant représentées en traits continus sur la figure. Le dispositif représenté à la figure 7 comprend un prédicteur spatial prévisionnel 18 des zones a contours, un prédicteur spatial prévisionnel 19 des zones uniformes et mobiles, un dispositif 20 de reconstruction de la donnée d'entrée X, un prédicteur temporel 21 des zones uniformes et fixes, un dispositif 22 de sélection et un allocateur de code 23 représenté en pointillés et utilisé uniquement à l'émetteur pour calculer les codes à transmettre.

Le prédicteur 18 reçoit sur une première entrée la donnée X à coder s'il est situé dans le dispositif d'émission ou le code CX reçu par le canal de transmission s'il est situé dans le dispositif de réception. Le prédicteur 18 est relié par une deuxième entrée à la sortie du prédicteur temporel 21 qui lui transmet la valeur de la prédiction temporelle $\hat{P}t,n$ des zones uniformes et fixes et est relié par une troisième entrée à la sortie du prédicteur spatial 19 des zones uniformes et mobiles. Le prédicteur 18 calcule une valeur de prédiction $\alpha.\hat{P}s,n+1$ qui représente la prédiction spatiale prévisionnelle des zones à contours. La sortie du prédicteur 18 est rebouclée à une quatrième entrée de celui-ci pour permettre la prise en compte de chaque nouvelle valeur $\alpha.\hat{P}s,n+1$ calculée pour le calcul de la prédiction du point suivant. Le prédicteur spatial prévisionnel des zones uniformes et mobiles 19 comprend quatre entrees. Une première entrée reçoit la donnée X du point à coder s'il est situé dans le dispositif d'émission ou le code CX reçu s'il est situé dans le dispositif de réception, la deuxième entrée est reliée à la sortie du prédicteur temporel 21 transmettant la prédiction temporelle $\hat{P}t,n$, la troisième est reliée à la sortie du prédicteur spatial des zones à contour 18, et la quatrième entrée est reliée à la sortie du prédicteur 19 pour tenir compte, a chaque calcul d'une nouvelle valeur de prédiction, du résultat de la prédiction précédente calculée. Le dispositif de reconstruction de la donnée d'entrée 20 comprend quatre entrées, une première entrée est reliée à la sortie du prédicteur 19 une deuxième entrée est reliée à la sortie du prédicteur 18, une troisième entrée reçoit la donnée X à coder ou le code CX transmis sur le canal de transmission suivant que le dispositif 20 est disposé à l'intérieur du dispositif d'émission ou à l'intérieur du

dispositif de réception. La quatrième entrée du dispositif 20 est reliée à la sortie du prédicteur 21 transmettant l'information de prédiction temporelle $\hat{P}t,n$. Le dispositif 20 transmet sur sa sortie la valeur reconstruite Xre de la donnée d'entrée X. L'allocateur de code 23 uniquement utilisé à l'émission est relié aux sorties respectives des prédicteurs 18, 19 et 21 et aux sorties du dispositif de sélection 22 pour calculer les codes correspondant résultant de la sélection d'un des prédicteurs 18, 19 ou 21 par le dispositif de sélection 22.

Le prédicteur temporel 21 des zones uniformes et fixes comprend un prédicteur temporel 24 relié à la sortie du dispositif de reconstruction de la donnée d'entrée 20 au travers d'une mémoire ligne de points 25, une mémoire de trame 26 interposée entre un dispositif de calcul des prédictions inter-trames 27 et la sortie du prédicteur temporel 24. Le prédicteur temporel 24 est un prédicteur inter-trame qui calcule la moyenne arithmétique $\hat{P}(t) = 1/4\ (\hat{A} + \hat{B} + \hat{C} + \hat{D})$ des données reconstruites $\hat{A}$, $\hat{B}$, $\hat{C}$ et $\hat{D}$ des points A, B, C, D qui sont mémorisés dans la mémoire ligne de points 25. Le résultat de calcul P(t) est mémorisé à l'intérieur de la mémoire de trame 26 pour être ensuite appliqué à une première entrée du dispositif de calcul des prédictions inter-trame 27 qui multiplie la prédiction $\hat{P}(t)$ calculée par un coefficient $\gamma$ pour obtenir le produit $\gamma\ \hat{P}(t)$ et pour additionner le produit $\gamma\ \hat{P}(t)$ à un produit $\beta\ \hat{C}$ où $\beta$ est un coefficient et $\hat{C}$ représente la valeur de la donnée reconstruite du point C de la trame courante homologue du point X analysé sur la ligne précédente. Le résultat du calcul de la fonction $\gamma\ \hat{P}t + \beta\hat{C}$ correspond à la valeur de la prédiction temporelle des zones uniformes et fixes $\hat{P}t,n$ qui est transmise aux entrées des prédicteurs 18 et 19, du dispositif de reconstruction de la donnée transmise 20, et de l'allocateur de codes 23.

Le dispositif de sélection 22 comprend un premier dispositif de calcul d'erreurs des prédictions spatiales 28, un dispositif de calcul d'erreurs des prédictions temporelles 29, une memoire ligne des erreurs des prédictions spatiales 30, une mémoire ligne des erreurs des prédictions temporelles 31 ainsi que deux logiques de sélection 32, 33 pour commander les prédicteurs 18 et 19, le dispositif de reconstruction de la donnée transmise 20 ainsi que l'allocateur de code 23 du dispositif d'émission. Le dispositif de calcul des erreurs des prédictions spatiales 28 possède deux entrées reliées respectivement à la sortie du prédicteur 19 et à la sortie du dispositif de reconstruction de la donnée transmise 20. Egalement le dispositif de calcul des erreurs des prédictions temporelles 29 possède deux entrées reliées respectivement, d'une part, à la sortie du dispositif de reconstruction de la donnée transmise 20 et d'autre part, à la sortie du prédicteur 21 transmettant la valeur de prédiction temporelle $\hat{P}t,n$ fourni par la sortie du dispositif de calcul des prédictions inter-trame 27. Les sorties des dispositifs 28 et 29 sont reliées respectivement aux entrées de données des mémoires ligne 30 et 31. La mémoire 30 mémorise les erreurs des prédictions spatiales calculées successivement pour chaque point analysé sur une ligne d'image et la mémoire 31 mémorise les erreurs des prédictions temporelle calculées pour chaque point analysé successivement, sur une ligne d'image. Les sorties des mémoires 30 et 31 sont reliées respectivement aux entrées des logiques de sélection 32 et 33. Les mémoires 30 et 31 sont organisées pour appliquer sur les entrées respectives des logiques de sélection 32 et 33 des erreurs de prédiction $\hat{E}1B$, $\hat{E}1C$, $\hat{E}1D$, et $\hat{E}2D$, $\hat{E}2C$ et $\hat{E}2B$ calculés pour les points B, C, D de la ligne précédente directement voisins du point X courant analysé et les erreurs de prédiction $\hat{E}1A$ et $\hat{E}2A$ obtenues aux sorties des dispositifs de calcul d'erreur de prédiction spatiale et temporelle 28 et 29, les points A, B, C, D étant disposés conformément à l'organisation de la fenêtre d'analyse des points de l'image représentés à la figure 5 pour les comparer à l'intérieur des logiques de sélection 32 et 33 aux seuils de commutation présélectionnés. Les logiques de sélection 32 et 33 fournissent en résultat de ces comparaisons les signaux de sélection R, S, T. Le signal R prend le niveau 1 logique lorsque le point courant analysé appartient à une zone à contours ou fortement texturée de l'image, le signal S prend le niveau 1 logique lorsque le point courant analysé appartient à une zone uniforme et mobile de l'image et le signal T prend la valeur logique l'lorsque le point courant analysé correspond à une zone uniforme et fixe de l'image.

Si QZC designe l'opérateur du quantificateur utilisé pour quantifier les points situés dans des zones à contours et QZU désigne l'opérateur du quantificateur utilisé pour quantifier les points situés dans les zones uniformes, les fonctions F1, F2 des opérateurs des prédicteurs 18, 19 et la fonction F3 de l'opérateur de reconstruction de la donnée transmise 20 du codeur d'émission sont définies de la manière suivante:

1) $\alpha.\hat{P}s,n+1 = F1\ (X, \hat{P}s,n, Pt,n, \alpha\ \hat{P}s,n) = \alpha\ (\frac{\alpha+\hat{D}}{2})_{\text{à l'instant } t} = \alpha(\frac{\hat{A}+\hat{C}}{2})_{\text{à l'instant } t+1}$

2) $\hat{P}s,n+1 = F2\ (\hat{X}, \hat{P}s,n, \alpha\ \hat{P}s,n) = (\frac{\hat{X}+\hat{D}}{2})_{\text{à l'instant } t} = (\frac{\hat{A}+\hat{C}}{2})_{\text{à l'instant } t+1}$

3) $\hat{X} = F3\ (X,\hat{P}s,n\ \alpha\ \hat{P}s,n, \hat{P}t,n)$

<u>Si R = 1</u>

$.\alpha\ \hat{P}s,n+1 = \frac{\alpha}{2}\ [QZC\ (X - \alpha\ \hat{P}s,n) + \alpha\ \hat{P}s,n + \hat{D}] = \{\frac{\alpha}{2} QZC\ (X - \alpha\ \hat{P}s,n)\} + \{\frac{\alpha}{2}\ (\alpha\ \hat{P}s,n + \hat{D})\}$

$.\hat{P}s,n+1 = \frac{1}{2}\{QZC\ (X - \alpha\ \hat{P}s,n)\} + \frac{1}{2}\ (\alpha\ \hat{P}s,n + \hat{D})$

$.\hat{x} = QZC\ (X - \alpha\ \hat{P}s,n) + \alpha\ \hat{P}s,n$

<u>Si S = 1</u>

$.\alpha\ \hat{P}s,n+1 = \frac{\alpha}{2}[QZU\ (X - \hat{P}s,n) + \hat{P}s,n + \hat{D}] = \{\frac{\alpha}{2} QZU\ (X - \hat{P}s,n)\} + \{\frac{\alpha}{2}\ (\hat{P}s,n + \hat{D})\}$

$.\hat{P}s,n+1 = \frac{1}{2}\ \{QZU\ (X - \hat{P}s,n)\} + \frac{1}{2}\ (\hat{P}s,n + \hat{D})$

$.\hat{X} = QZU\,(X - \hat{P}s,n) + \hat{P}s,n$

<u>Si T = 1</u>

$.\alpha\,\hat{P}s,n+1 = \frac{1\alpha}{2}[QZU\,(X - \hat{P}t,n) + \hat{P}t,n + \hat{D}]] = \{\frac{\alpha}{2}QZU\,(X - \hat{P}t,n)\} + \{\frac{\alpha}{2}(\hat{P}t,n + \hat{D})\}$

$.Ps,n+1 = \frac{1}{2}\{QZU\,(X - \hat{P}t,n)\} + \frac{1}{2}(\hat{P}t,n + \hat{D})$

$.\hat{X} = QZU\,(X - \hat{P}t,n) + \hat{P}t,n$

Naturellement le décodeur de réception effectue des calculs sensiblement identiques à la différence toutefois que dans les équations précédentes les erreurs de prédiction de la forme X - $\hat{P}$n doivent être substituées par les valeurs des codes CX reçues et que les fonctions des caractéristiques de quantifications Q' utilisées doivent posséder des fonctions inverses de celles de l'allocateur de code 23 d'émission de manière que la relation

Q'C((X) = Q (X - Pn) soit toujours vérifiée.

Les détails de réalisation des prédicteurs 18, 19 et 21 ainsi que du dispositif de reconstruction des données transmises 20 sont représentés à la figure 8 à l'intérieur de lignes en pointillés. Sur la figure 8, le prédicteur 18 comprend un ensemble de six mémoires programmables, à lecture seule, référencées de 34 à 39. Les mémoires 34 et 36 renferment chacune une table de quantification des zones contours. Les mémoires 37 à 39 renferment chacune une table de multiplication de l'opérande appliquée sur chacune de leur entrée d'adressage par le coefficient constant $\frac{\alpha}{2}$. Les mémoires 34 à 36 sont adressées respectivement par les sorties de dispositifs de calcul d'erreurs de prédiction formés par des soustracteurs 40 à 42 qui calculent respectivement les erreurs de prédictions, temporelles X - $\hat{P}$t,n des zones uniformes fixes, spatiales X - α $\hat{P}$s,n des zones à contours et spatiales X - $\hat{P}$s,n des zones uniformes et mobiles. Chaque donnée X est appliquée sur une première entrée des soustracteurs 40 à 42. La prédiction temporelle $\hat{P}$t,n est appliquée par la sortie du prédicteur 21 sur la deuxième entrée du soustracteur 40. La prédiction prévisionnelle α $\hat{P}$s,n est appliquée sur la deuxième entrée du soustracteur 41 et la prédiction spatiale $\hat{P}$s,n est appliquée sur la deuxième entrée du soustracteur 42. Les mémoires 37 à 39 sont adressées respectivement par les sorties des circuits additionneurs référencés de 43 à 45, chaque additionneur recevant sur une première entrée la donnée reconstruite $\hat{D}$ du point D de la fenêtre représenté à la figure 6, la prédiction temporelle $\hat{P}$t,n est appliquée sur la deuxième entrée de l'additionneur 43, la prédiction prévisionnelle α$\hat{P}$s,n est appliquée sur la deuxième entrée de l'additionneur 44 et la prédiction spatiale $\hat{P}$s,n est appliquée sur la deuxième entrée de l'additionneur 45. Chacune des mémoires 34 à 39 est sélectionnée par les signaux R, S, T transmis par le dispositif de sélection 22 de la figure 7, non représenté sur la figure 8. Les données lues à l'intérieur des mémoires 34 à 36 sont appliquées sur une première entrée d'un circuit additionneur 46. Les données lues dans les mémoires 37 à 39 sont appliquées sur la deuxième entrée de l'additionneur 46. L'additionneur 46 effectue l'addition des erreurs de prédiction quantifiées multipliées par $\frac{\alpha}{2}$ lues dans l'une ou l'autre des mémoires 34 ou 36 aux valeurs reconstruites $\frac{\alpha}{2}$ ($\hat{P}$ + $\hat{D}$) obtenu en sortie des mémoires 37 à 39, $\hat{P}$ étant égal à α $\hat{P}$s,n, Ps,n ou $\hat{P}$t,n suivant l'état des signaux R, S, T. Le résultat de l'addition $\frac{\alpha}{2}$x (Q (X - $\hat{P}$) + $\hat{P}$ + $\hat{D}$) est appliqué à une logique de débordement 47 qui fournit sur sa sortie l'erreur de prédiction prévisionnelle α $\hat{P}$s,n+1, cette erreur prévisionnelle étant mémorisée à l'intérieur du registre 48.

Le circuit 20 est composé des circuits 49 à 55 ainsi que des circuits soustracteurs 40, 42 également communs au circuit prédicteur 18. Les circuits 49, 50 et 51 sont constitués par des mémoires programmables à lecture seule et contiennent les tables de quantification des zones uniformes et des zones à contours. Les memoires 49 et 51 sont adressées respectivement par les sorties des circuits soustracteurs 40 et 42. La mémoire 50 contient une table de quantification des zones à contours, elle est reliée par son entrée d'adressage à la sortie du circuit soustracteur 41. Ces memoires sont sélectionnées respectivement par les signaux de sélection R, S, T fournis par le dispositif de sélection 22 de la figure 7. Chaque donnée lue dans une mémoire 49 à 51 sélectionnée représente l'erreur de prédiction quantifiée fournie par la sortie de l'un ou l'autre des soustracteurs 40, 41 ou 42. Chaque donnée lue est appliquée à une première entrée du circuit additionneur 52 dont la deuxième entrée est reliée à la sortie d'un multiplexeur 53 qui aiguille sur cette deuxième entrée l'une des trois prédictions, temporelle $\hat{P}$t,n, prévisionnelle α$\hat{P}$s,n ou spatiale $\hat{P}$s,n, pour l'additionner à l'erreur de prédiction quantifiée obtenue de l'une des mémoires 49 à 51. La sortie de l'additionneur 52 est appliquée à l'entrée d'un circuit de débordement 54 dont la sortie est reliée directement à l'entrée d'un registre de mémorisation 55 qui mémorise chaque résultat X = Q(X - $\hat{P}$) + $\hat{P}$ correspondant à la donnée X reconstituée obtenue à la sortie de l'additionneur 52, $\hat{P}$ étant égal à α $\hat{P}$s,n, $\hat{P}$s,n ou $\hat{P}$t,n suivant l'état des signaux R, S, T.

Le circuit de prédiction 19 est constitué par les circuits 56 à 58 et les circuits additionneurs 43 à 45 communs au circuit de prédiction 18 et par les mémoires 49 à 51 communes au circuit 20. Le circuit 56 est un circuit additionneur dont la première entrée est reliée aux sorties des mémoires 49 à 51 et dont la deuxième entrée reçoit les données fournies par les sorties des additionneurs 43, 44, et 45 au travers d'un circuit multiplexeur 57 commandé par les signaux de validation R, S, T fournis par la logique de sélection 22 de la figure 1. La sortie du circuit additionneur 56 fournit une valeur de prédiction égale à $\frac{1}{2}$ (Q (X - $\hat{P}$) + $\hat{P}$ + $\hat{D}$) à l'entrée d'un circuit de débordement 58 dont la sortie est reliée à un registre de mémorisation 59, $\hat{P}$ étant égal comme précédemment à α $\hat{P}$s,n, $\hat{P}$s,n ou $\hat{P}$ t,n suivant l'état des signaux R, S, T.

Le circuit de prédiction temporelle 21 contient outre les circuits 24, 25, 26 et 27 déjà représentés à la figure 7, les registres 62, 63 et 67. Le circuit de mémorisation 26 est constitué par une mémoire à écriture et lecture. Le

dispositif de calcul 27 effectue l'opération $\gamma\hat{P}t+\beta C$ il est constitué par deux mémoires programmables, à lecture seule, $60_a$ et $60_b$ et par un circuit additionneur 61, les mémoires $60_a$ et $60_b$ contenant chacune respectivement une table de multiplication de la donnée reconstruite $\hat{C}$ du point de la fenêtre représentée à la figure 6 par un coefficient β et une table de multiplication de la prédiction temporelle $\hat{P}t$ par un coefficient γ. Les sorties des mémoires $60_a$ et $60_b$ sont appliquées respectivement aux deux entrées du circuit additionneur 61 qui fournit sur sa sortie le résultat de l'addition du produit γ. Pt au produit β.Ĉ. Le résultat fourni par le circuit additionneur 61 est mémorisé à l'intérieur du registre 62 sur les sorties duquel est obtenue la valeur de la prédiction temporelle P̂t,n. La valeur reconstruite Ĉ est obtenue en sortie de la mémoire ligne 25 et la valeur de la prédiction P̂t est obtenue à la sortie du circuit de calcul 24 de la prédiction temporelle P̂t au travers de la mémoire de trame et du registre 63. La valeur de la prédiction intertrame qui est égale à la moyenne arithmétique des valeurs reconstruites des points A B E et F représentés à l'intérieur de la fenêtre de la figure 6 est obtenue à la sortie du circuit additionneur 66 dont les deux entrées sont reliees respectivement aux sorties de deux additionneurs 64 et 65, sur les entrées desquels sont appliquées les valeurs reconstruites des points A, B, E, F de la fenêtre représentée à la figure 6. La valeur de la prédiction inter-trames est mémorisée dans le registre 67.

Les détails de réalisation des circuits 28 et 30 de la figure 7 sont maintenant décrits à l'aide du schéma de réalisation de la figure 9. Sur la figure 9, le circuit 28 se compose d'un circuit soustracteur 68 et d'un dispositif de calcul de valeur absolue 69. Le circuit soustracteur 68 calcule la différence Â des valeurs du point reconstruit A avec la valeur de la prédiction P̂s,n et le résultat du calcul est appliqué à l'entrée du circuit de calcul de valeur absolue 69 qui génère sur sa sortie l'erreur de prédiction Ê1A. Le signe du résultat obtenu en sortie du soustracteur 68 est appliqué à l'entrée du dispositif 32 de sélection des zones uniformes et à contours. Le dispositif 32 comprend un premier circuit additionneur 70 qui reçoit sur une première entrée la valeur de prédiction P̂s,n fournie par le prédicteur 19 et sur une deuxième entrée une valeur de seuil de contours S1. Le circuit 70 effectue l'opération - P̂s,n - S1 et applique le résultat de cette opération à une première entrée d'un circuit additionneur 71 dont la deuxième entrée reçoit la donnée Â reconstituée fournie par la sortie du registre 55 de la figure 8. Le résultat Â - P̂s,n - S1 fourni par la sortie du circuit 71 est appliqué à une première entrée d'un circuit OU logique 72 au travers d'un circuit à verrouillage 73 qui autorise la transmission de l'état de la sortie du circuit additionneur 71 sur la première entrée du circuit OU 72 lorsque le signe de la différence Â - P̂s,n fourni par le soustracteur 68 est positif. Le circuit 32 comprend également un circuit soustracteur 74 qui effectue la différence P̂ - S1 entre la valeur de la prédiction P̂s,n appliquée sur son entrée "+" et la valeur de seuil $S_1$ sur son entrée "-" la différence P̂s,n - S1 étant appliquée sur l'entrée "+" d'un deuxième circuit soustracteur 75 qui compare cette différence à la valeur de la donnée reconstruite Â appliquée sur son entrée "-" Le résultat de la comparaison - Â + P̂s,n - S1 est appliqué sur une deuxième entrée du circuit logique OU 72 au travers d'un circuit à verrouillage 76 qui retransmet le résultat fourni par la sortie du soustracteur 75 sur la deuxième entrée du circuit OU 72 lorsque la valeur de la donnée reconstruite Â est inférieure à la valeur de la prédiction P̂s,n. Le circuit 32 comprend également trois autres circuits comparateurs 77, 78 et 79 sur une première entrée desquelles sont appliquées respectivement les erreurs de prédiction qui sont successivement memorisées à l'intérieur de la mémoire ligne des erreurs de prédiction 30 de la figure 7, les deuxiemes entrées des comparateurs 77 et 79 recevant la valeur de seuil S1. Les sorties des comparateurs 77, 78 et 79 sont reliées respectivement à des troisième, quatrième et cinquième entrée du circuit OU 72. La sortie du circuit OU 72 émet un signal binaire de niveau 1 logique, correspondant au signal R lorsque l'une quelconque des erreurs de prédiction Ê1A, Ê1B, Ê1C et Ê1D se trouve être supérieure au seuil S1 prédéterminé appliqué sur chacune des entrées de comparaison dès circuits 70, 74, 77, 78 et 79. Ce niveau 1 logique signifiant que le point analysé se trouve situé sur une zone à contours ou fortement texturée de l'image.

Le circuit de sélection des zones uniformes et mobiles générant le signal S est constitué par des circuits identiques à ceux décrits à la figure 8 et par conséquent les détails de réalisation du circuit 33 n'ont pas besoin d'être plus longuement détaillé, on notera toutefois que pour utiliser le schéma de la figure 8 à la réalisation du circuit de sélection 33, il est necessaire de substituer respectivement les signaux P̂s,n et E1A à E1D par les signaux Pt,n et E2A à E2D, et de remplacer le premier seuil de comparaison S1 par un deuxième seuil de comparaison S2.

Le circuit de sélection de zones uniformes et fixes pour générer le signal T n'est pas représenté, il pourra être très facilement réalisé à l'aide d'une porte "non ou" à deux entrées sur lesquelles seront appliqués respectivement les signaux R et S.

**Revendications**

1. Procédé de compression de débit de données numériques transmises entre au moins un émetteur (1) et un récepteur (2) de télévision, les données étant représentatives des valeurs de luminance et/ou de chrominance de chaque point d'une image de télévision et étant codées à l'émetteur (1) par un dispositif de codage différentiel du type comprenant au moins un prédicteur (4), un quantificateur (5), un dispositif de reconstruction de la donnée transmise (6) et un allocateur de code (7) et décodées au récepteur (2) par un décodeur différentiel comprenant au moins un transformateur de code (9), un prédicteur (10) et un dispositif de reconstruction de la donnée transmise (11), le procédé consistant à coder les données relatives à chaque point

courant à transmettre à l'aide d'un premier prédicteur (18) et d'un premier quantificateur (34, 35, 36) lorsque le point appartient à une zone à contours, à coder les données relatives à chaque point d'une zone uniforme ou faiblement texturée à l'aide d'au moins un deuxième prédicteur (19) et d'un deuxième quantificateur (49, 50, 51), et à décoder au récepteur chaque donnée reçue à l'aide d'une caractéristique de prédiction donnant une valeur de prédiction identique a celle qui a été calculée à l'émetteur pour coder le code de la donnée reçue, caractérisé en ce qu'il consiste à comparer (32, 33) les erreurs de prédiction de chaque prédicteur de l'émetteur et du récepteur à au moins une valeur de seuil d'erreur prédéterminée, pour coder à l'émetteur les données du point courant à l'aide de mots de codes différents de longueur fixe, suivant que les résultats des comparaisons des erreurs de prédiction des points voisins du point courant déjà transmises au récepteur indiquent que le point est dans une zone à contours ou dans une zone uniforme et pour commuter le récepteur sur un prédicteur qui a la même caractéristique de prédiction que le prédicteur qui a été utilisé pour coder la donnée du point courant à l'émetteur.

2. Procédé selon la revendication 1, caractérisé en ce que les comparaisons (13) des erreurs de prédiction des prédicteurs de l'émetteur et du récepteur sont effectuées par rapport à au moins deux seuils d'erreurs différents, un premier seuil $S_1$ pour identifier l'appartenance de chaque point courant de l'image à une zone a contours importants ou fortement texturée de l'image ou son appartenance à une zone uniforme et un deuxième seuil $S_2$ pour identifier l'appartenance de chaque point courant à une zone uniforme mobile ou immobile de l'image.

3. Procédé selon la revendication 2, caractérisé en ce qu'il consiste à commuter (13, 14) l'émetteur sur un quantificateur ayant une caractéristique de quantification à niveaux de reconstruction notablement espacés et sur un prédicteur ayant une caractéristique de prédiction ne prenant en compte que les états des points voisins dans la trame du point courant examine lorsque le point courant est situé dans une zone à contours importants ou fortement texturée de l'image.

4. Procédé selon les revendications 2 et 3, caractérisé en ce qu'il consiste à commuter (15) l'émetteur sur un quantificateur ayant une caractéristique de quantification possédant des niveaux de reconstruction resserrés au voisinage de l'erreur de prédiction nulle lorsque le point courant examiné est situé dans une zone uniforme de l'image.

5. Procédé selon la revendication 4, caractérisé en ce qu'il consiste a commuter (15, 16) l'émetteur sur un prédicteur inter-trame prenant en compte les états des points voisins homologues des points voisins du point courant dans la trame d'image précédente lorsque le point courant est situé dans une zone immobile uniforme.

6. Procédé selon les revendications 4 et 5, caractérisé en ce qu'il consiste à commuter (15, 17) l'émetteur sur un prédicteur intra-trame prenant en compte les états des points voisins dans la trame du point courant lorsque le point courant est situé dans une zone mobile uniforme.

7. Système pour la mise en oeuvre du procédé selon l'une quelconque des revendications 1 à 6, caractérisé en ce que le dispositif de codage différentiel de l'émetteur comprend un allocateur de code (23) couplé respectivement aux sorties de premier (40), deuxième (41) et troisième (42) dispositifs de calcul d'erreurs de prédiction qui calculent respectivement les erreurs de prédiction spatiales des zones à contours ou fortement texturées de l'image, les erreurs de prédiction spatiales des zones uniformes et les erreurs de prédiction temporelles des zones uniformes et fixes, l'allocateur de code (23) étant commandé par un dispositif de sélection (22) qui sélectionne une sortie des premier, deuxième et troisième dispositifs de calcul d'erreurs de prédiction pour appliquer une valeur d'erreur de prédiction à l'entrée d'une structure de codage de l'allocateur de code (23), pour coder chaque donnée d'un point courant appliquée à l'entrée d'un prédicteur suivant trois codes différents de longueur fixe, selon que, le point courant est situé dans une zone a contours ou fortement texturée de l'image ou que le point courant est situé dans une zone uniforme fixe ou en mouvement.

8. Système selon la revendication 7, caractérisé en ce que les sorties des dispositifs de calcul d'erreurs de prédiction (40, 41, 42) adressent chacune au moins une mémoire morte (34, 35, 36, 49, 50, 53) renfermant une table de quantification des erreurs de prédiction, les sorties de chaque mémoire morte étant reliées à des circuits additionneurs (46, 52) sur les entrées desquels est appliquée au moins une valeur de prédiction spatiale ou temporelle du point précédant le point courant, pour calculer la valeur de prédiction spatiale du point courant lorsqu'il est situé dans une zone à contours ou fortement texturée de l'image ou lorsqu'il est situé dans une zone uniforme et pour reconstruire la donnée relative au point courant appliquée à l'entrée du codeur.

9. Système selon les revendications 7 et 8, caractérisé en ce que le premier dispositif de calcul d'erreur de prédiction (40) est couplé par une entrée à la sortie d'un circuit de prédiction temporel (21) comprenant un organe de calcul (24) pour calculer une moyenne arithmétique des valeurs des données reconstruites des points homologues des points voisins du point courant dans la trame précédente et un circuit additionneur (27) pour additionner à la valeur calculée par l'organe de calcul au moins une donnée reconstruite d'un point voisin du point courant à l'intérieur de la même trame, le résultat de l'addition correspondant à la valeur de prédiction temporel du point courant.

10. Système selon l'une quelconque des revendications 7 à 9, caractérisé en ce que le décodeur différentiel de réception comprend des prédicteurs délivrant des valeurs de prédiction identiques lorsqu'ils sont adressés par les codes (CX) reçus du canal de transmission (3).

**Patentansprüche**

1. Verfahren zur Kompression des Durchsatzes von zwischen mindestens einem Sender (1) und einem Fernsehempfänger (2) übertragenen digitalen Daten, wobei die Daten repräsentativ für die Werte der Leuchtdichte und/oder der Farbtönung jedes Punktes eines Fernsehbildes sind und im Sender (1) durch eine Differentialkodiereinrichtung kodiert werden, die mindestens einen Prädiktor (4), einen Quantifizierer (5) und eine Vorrichtung zur Wiederherstellung des übertragenen Datenwerts (6) und einen Kodezuweiser (7) umfaßt, und wobei die Daten im Empfänger (2) durch einen Differentialdekoder dekodiert werden, der mindestens einen Umkodierer (9), einen Prädiktor (10) und eine Vorrichtung zur Wiederherstellung des übertragenen Datenwerts (11) umfaßt, wobei das Verfahren darin besteht, die jeden laufenden zu übertragenden Punkt betreffenden Daten mit Hilfe eines ersten Prädiktors (18) und eines ersten Quantifizierers (34, 35, 36) zu verschlüsseln, wenn der Punkt einer Zone mit Umrissen angehört, die jeden Punkt einer gleichmäßigen oder schwach texturierten Zone mit Hilfe mindestens eines zweiten Prädiktors (19) und eines zweiten Quantifizierers (49, 50, 51) zu verschlüpsseln: und am Empfänger jeden empfangenen Datenwert mit Hilfe einer Voraussagecharakteristik zu entschlüsseln, welche einen Voraussagewert liefert, der demjenigen gleicht, der beim Sender zur Kodierung des Kodes des empfangenen Datenwerts errechnet wurde, dadurch gekennzeichnet, daß das Verfahren darin besteht, die Voraussagefehler jedes Prädiktors des Senders und des Empfängers mit mindestens einem vorgegebenen Fehlerschwellwert zu vergleichen (32, 33), um beim Sender die Daten des laufenden Punktes mit Hilfe von Wärtern unterschiedlicher Kodes fester Länge zu verschlüsseln, je nachdem, ob die Vergleiche der Fehlervoraussage zu den Punkten in der Umgebung des bereits an den Empfänger gesandten laufenden Punktes anzeigen, daß der Punkt in einer Zone mit Umrissen oder in einer gleichmäßigen Zone liegt, und um den Empfänger an einen Prädiktor zu schalten, der die gleiche Voraussagecharakteristik besitzt wie der Prädiktor, welcher zum Verschlüsseln des Datenwerts des laufenden Punktes im Sender benutzt wurde.

2. Verfahren nach Anspruch 1, dadurch gekennzeichnet, daß die Vergleiche (13) der Voraussagefehler der Prädiktoren des Senders und des Empfängers in Bezug auf mindestens zwei verschiedene Fehlerschwellwerte durchgeführt werden, wobei eine erste Schwelle $S_2$ die Zugehörigkeit jedes laufenden Punktes entweder zu einer Zone mit deutlichen Umrissen oder stark texturierten Zone des Bildes oder seine Zugehörigkeit zu einer gleichmäßigen Zone identifiziert, und eine zweite Schwelle $S_2$ die Zugehörigkeit jedes laufenden Punktes zu einer gleichmäßigen beweglichen oder zu einer unbeweglichen Zone des Bildes identifiziert.

3. Verfahren nach Anspruch 2, dadurch gekennzeichnet, daß es im Umschalten (13, 14) des Senders auf einen Quantifizierer mit einer Quantifikationscharakteristik mit besonders weit distanziertem Wiederherstellungsniveau und auf einen Prädiktor mit einer Voraussagecharakteristik besteht, welche nur die Zustände der dem überprüften Punkt des Rasters benachbarten Punkte berücksichtigt, wenn sich der laufende Punkt in einer Zone mit deutlichen Umrissen oder starker Bildtexturierung befindet.

4. Verfahren nach den Ansprüchen 2 und 3, dadurch gekennzeichnet, daß es im Umschalten (15) des Senders auf einen Quantifizierer besteht, der eine Quantifikationscharakteristik aufweist, welche in der Umgebung des Voraussagefehlers Null eng distanzierte Wiederherstellungsniveaus besitzt, wenn sich der überprüfte laufende Punkt in einer gleichmäßigen Bildzone befindet.

5. Verfahren nach Anspruch 4, dadurch gekennzeichnet, daß es im Umschalten (15, 16) des Senders auf einen Zwischenrasterprädiktor besteht, der die Zustände der zu den benachbarten Punkten des laufenden Punktes homologen benachbarten Punkte im voraufgehenden Bildraster berücksichtigt, wenn sich der Laufender Punkt in einer gleichmäßigen unbeweglichen Zone befindet.

6. Verfahren nach den Ansprüchen 4 und 5, dadurch gekennzeichnet. daß es im Umschalten (15, 17) des Senders auf einen Zwischenrasterprädiktor besteht, der die Zustände der dem laufenden Punkt benachbarten Punkte im Raster berücksichtigt, wenn sich der laufende Punkt in einer gleichmäßigen beweglichen Zone befindet.

7. System zur Durchführung des Verfahrens nach einem der Ansprüche 1 bis 6, dadurch gekennzeichnet, daß die Differentialkodiereinrichtung des Senders einen Kodezuweiser (23) enthält, der an die Ausgänge einer ersten (40), bzw. zweiten (41) bzw. dritten (42) Vorrichtung zur Berechnung der Voraussagefehler angeschlossen ist, wobei die Vorrichtungen jeweils die räumlichen Voraussagefehler der Umrisse enthaltenden oder erheblich texturierten Zonen bzw. die räumlichen Voraussagefehler der gleichmäßigen Zonen bzw. die zeitlichen Voraussagefehler der gleichmäßigen und feststehenden Zonen berechnen, wobei der Kodezuweiser (23) durch eine Wählvorrichtung (22) gesteuert wird, die einen Ausgang der ersten, zweiten und dritten vorrichtungen zur Berechnung der Voraussagefehler auswählt, um einen Voraussagefehlerwert an den Eingang einer Kodierstruktur des Kodezuweisers (23) zu schalten, um jeden an den Eingang eines Prädiktors angelegten Datenwert eines laufenden Punktes gemäß drei verschiedenen Kodes fester Länge zu kodieren, je nachdem, ob sich der laufende Punkt in einer Umrisse enthaltenden oder stark texturierten Zone des Bildes, oder in einer gleichmäßigen unbewegten oder bewegten Zone befindet.

8. System nach Anspruch 7, dadurch gekennzeichnet, daß die Ausgänge der Vorrichtungen zur Berechnung der Voraussagefehler (40, 41, 42) mindestens einen Festspeicher (34, 35, 36, 49, 50, 53) adressieren, welcher eine Quantifikationstabelle der Voraussagefehler enthalten, wobei die Ausgänge jedes Festspeichers an Addierkreise (46, 52) angeschlossen sind, an deren Eingänge mindestens ein räumlicher oder zeitlicher Voraussagewert des dem laufenden Punkt vorausgehenden Punkts angelegt wird, um den räumlichen Voraussagewert des laufenden Punktes zu berechnen, wenn er sich in einer Umrisse enthaltenden oder stark

texturierten Zone befindet, und um den Datenwert wiederherzustellen, welcher sich auf den am Eingang des Kodierers angelegten laufenden Punktes bezieht.

9. System nach den Ansprüchen 7 und 8, dadurch gekennzeichnet, daß die erste Vorrichtung zur Berechnung des Voraussaßefehlers (40) mit einem Einganß an den Ausgang eines zeitlichen Voraussagekreises (21) angeschlossen ist, der ein Rechenelement (24) zur Berechnung eines arithmetischen Mittels der wiederhergestellten Datenwerte der zu den benachbarten Punkten des laufenden Punktes homologen Punkte im voraufgegangenen Raster sowie einen Addierkreis (27) zum Hinzuaddieren mindestens eines wiederhersgestellten Datenwerts eines dem laufenden Punkt benachbarten Punktes innerhalb des gleichen Rasters zu dem vom Rechenelement berechneten Wert aufweist, wobei das Ergebnis der Addition dem zeitlichen Voraussagewert des laufenden Punktes entspricht.

10. System nach einem der Ansprüche 7 bis 9, dadurch gekennzeichnet, daß der Empfangsdifferentialdekoder Prädiktoren aufweist, die identische Voraussagewerte liefern, wenn sie von den Kodes (CX) adressiert werden, die über den Übertragungskanal (3) empfangen wurden.

## Claims

1. A method of compressing the digital data transmission rate between at least one transmitter (1) and a television receiver (2), the data being representative of the values of luminance and/or chrominance of each point of a television picture and being encoded in the transmitter (1) by a differential encoding device of the type comprising at least one predictor (4), a quantifier (5), a device for the reconstruction of the transmitted data (6), and a code allocator (7), and being decoded in the receiver (2) by a differential decoder comprising at least a code transformer (9), a predictor (10) and a device for the reconstruction of the transmitted data (11), the method consisting in encoding the data relative to each instant point to be transmitted by means of a first predictor (18) and a first quantifier (34, 35, 36), when the point belongs to a contoured zone, in encoding the data relative to each point of a uniform or slightly textured zone by means of at least a second predictor (19) and a second quantifier (49, 50, 51), and in decoding in the receiver each received information by means of a prediction characteristic yielding a prediction value identical to the one computed at the transmitter for encoding the code of the received information, characterized in that the method consists in comparing (32, 33) the prediction errors of each predictor of the transmitter and the receiver to at least one predetermined error threshold value, for encoding at the transmitter the data of the instant point by means of words of different codes of fixed length, according to whether the results of the comparisons of the prediction errors of the points neighbouring the instant point which have already been transmitted to the receiver indicate that the point is within a contoured zone or within a uniform zone, and for switching the receiver onto a predictor, which presents the same prediction characteristic as the predictor that has been used for encoding the information of the instant point at the emitter.

2. A method according to claim 1, characterized in that the comparisons (13) of the prediction errors of the predictors of the transmitter and of the receiver are performed in relation to at least two different error thresholds, whereof a first threshold $S_1$ serves to identify the belonging of each instant point of the picture to a heavily contoured or strongly textured picture zone or its belonging to a uniform zone, and whereof a second threshold $S_2$ serves to identify the belonging of each instant point to a uniform movable or stationary picture zone.

3. A method according to claim 2, characterized in that it consists in switching (13, 14) the transmitter onto a quantifier having a quantification characteristic of notably spaced levels of reconstruction and onto a predictor having a prediction characteristic, which seizes only the states of the points in the instant picture frame neighbouring the analysed instant point, when the instant point is located in a heavily contoured or strongly textured picture zone.

4. A method according to claims 2 and 3, characterized in that it consists in switching (15) the transmitter onto a quantifier having a quantification characteristic which presents closer reconstruction levels near the prediction value zero, when the analysed instant point is located in a uniform picture zone.

5. A method according to claim 4, characterized in that it consists in switching (15, 16) the transmitter onto an interframe predictor, which seizes the states of the homologous neighbouring points of the points neighbouring the instant point in the preceding picture frame, when the instant point is located in a uniform stationary zone.

6. A method according to claims 4 and 5, characterized in that it consists in switching (15, 16) the transmitter onto an interframe predictor, which seizes the states of the points in the picture frame neighbouring the instant point, when the instant point is located in a uniform moving zone.

7. A system for the implementation of the method according to any one of claims 1 to 6, characterized in that the differential encoding device of the transmitter comprises a code allocator (23) coupled respectively to the outputs of a first (40), second (41) and third (42) device for computing prediction errors, which compute respectively the spatial prediction errors of the contoured or strongly textured picture zones, the spatial prediction errors of the uniform zones and the temporal prediction errors of the uniform and stationary zones, the code allocator (23) being controlled by a selection device (22) adapted to select an output of the first, second and third devices for computing prediction errors, for applying a prediction error value to the input of

an encoding structure of the code allocator (23), for encoding each information of a instant point applied to the input of a predictor according to three different codes of fixed length, depending upon whether the instant point is located in a contoured or strongly textured picture zone or within a uniform zone, which is stationary or moving.

8. A system according to claim 7, characterized in that the outputs of the devices for computing prediction errors (40, 41, 42) each address at least one read-only-memory (34, 35, 36, 49, 50, 53), which store a quantification table for prediction errors, the outputs of each read-only memory being connected to adder circuits (46, 52), to the inputs of which is applied at least one spatial or temporal prediction value of the point preceding the instant point, in order to compute the spatial prediction values of the instant point when it is located a contoured or strongly textured picture zone or when it is within a uniform zone, and to reconstruct the information relative to the instant point applied to the encoder input.

9. A system according to claims 7 and 8, characterized in that the first device for computing prediction errors (40) is input-coupled to the output of a temporal prediction circuit (21) which comprises a computing element (24) for computing an arithmetical mean value of the values of the reconstructed data of the homologous points neighbouring the instant point in the preceding picture frame, and an adder circuit (27) for adding at least one reconstructed information of a point neighbouring the instant point located the same frame, to the value computed by the computing element, the result of the addition corresponding to the temporary prediction value of the instant point.

10. A system according to any one of the claims 7 to 9, characterized in that the differential receive decoder comprises predictors which supply identical prediction values, when they are addressed by the codes (CX) received through the transmission channel (3).

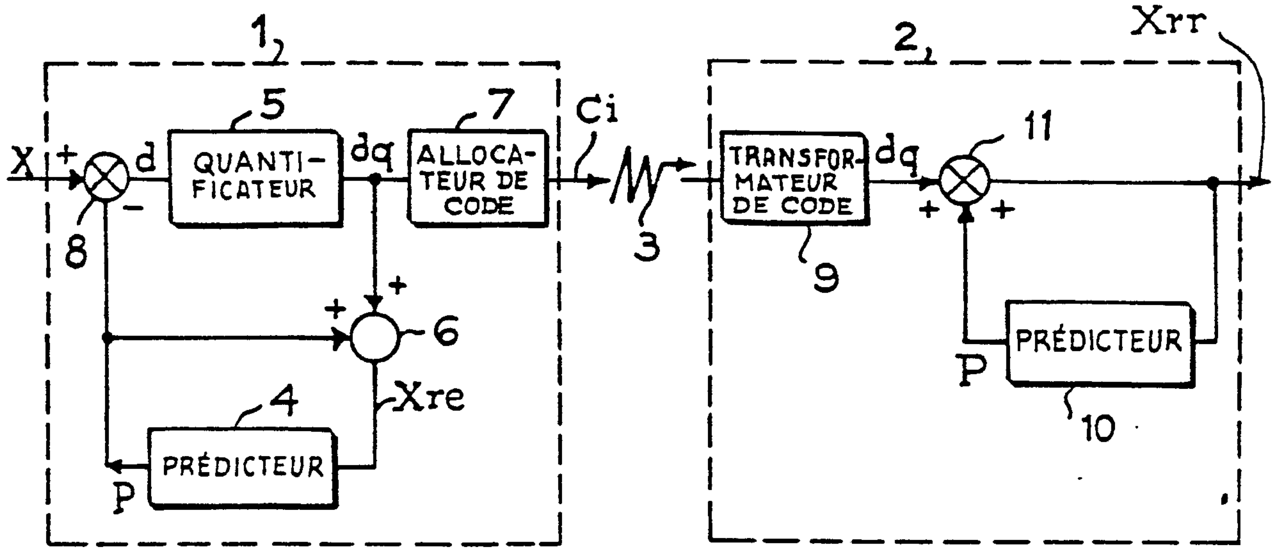
1
2
Xrr
X
+
d
5
QUANTI-
FICATEUR
dq
7
ALLOCA-
TEUR DE
CODE
Ci
3
TRANSFOR-
MATEUR
DE CODE
dq
11
+
+
9
8
-
+
+
6
Xre
4
PRÉDICTEUR
P
PRÉDICTEUR
P
10

Fig.1

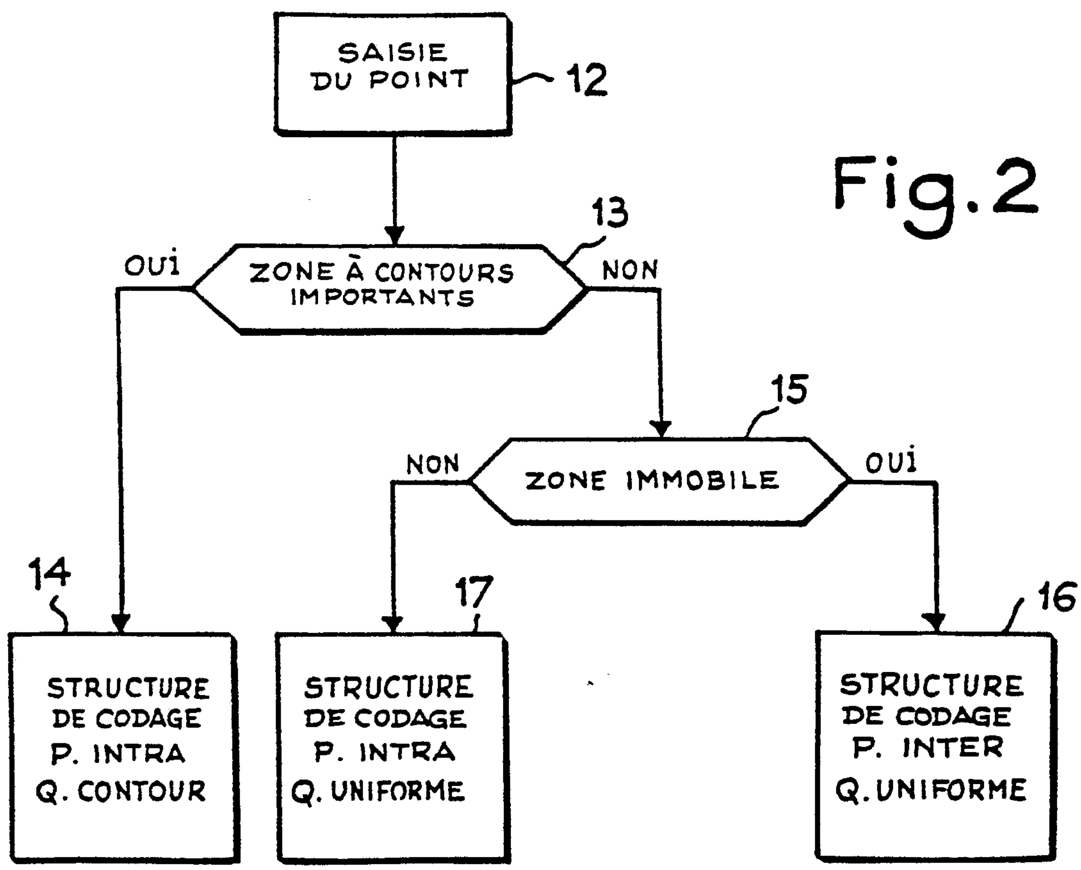
SAISIE
DU POINT
12
13
OUI
ZONE À CONTOURS
IMPORTANTS
NON
15
NON
ZONE IMMOBILE
OUI
14
17
16
STRUCTURE
DE CODAGE
P. INTRA
Q. CONTOUR
STRUCTURE
DE CODAGE
P. INTRA
Q. UNIFORME
STRUCTURE
DE CODAGE
P. INTER
Q. UNIFORME

Fig.2

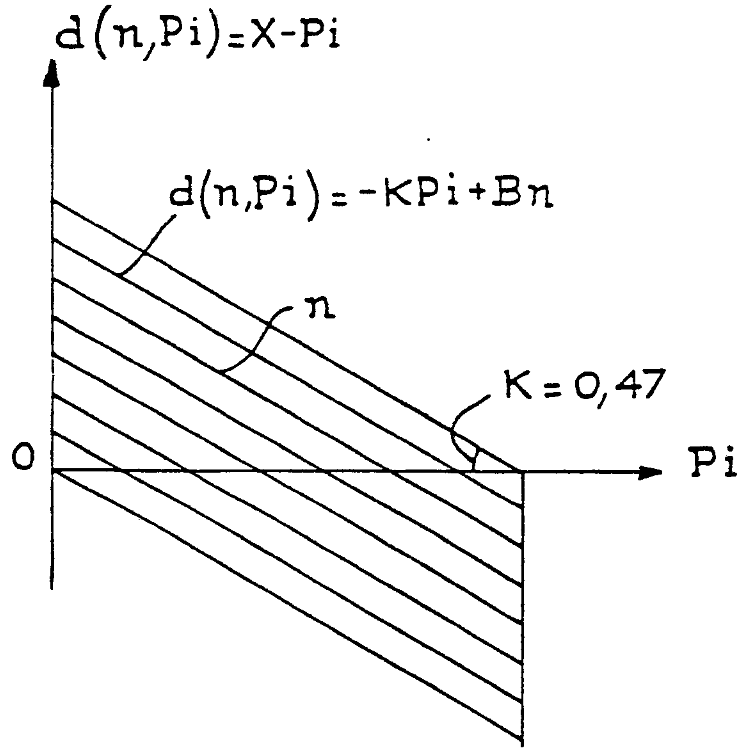


Fig.3

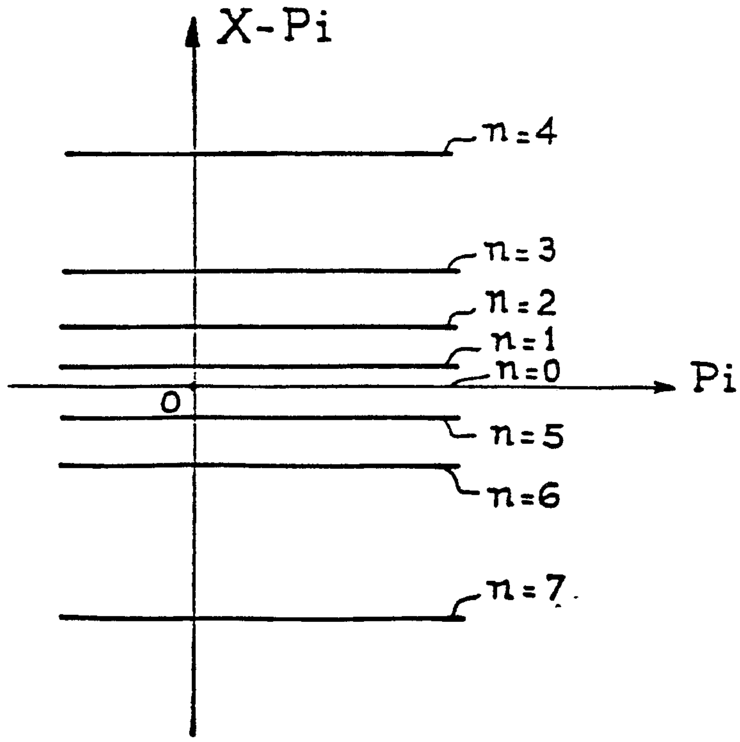


Fig.4

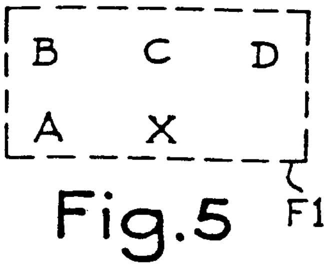


Fig.5

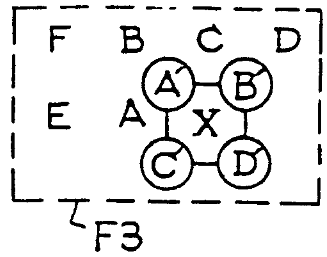


Fig.6

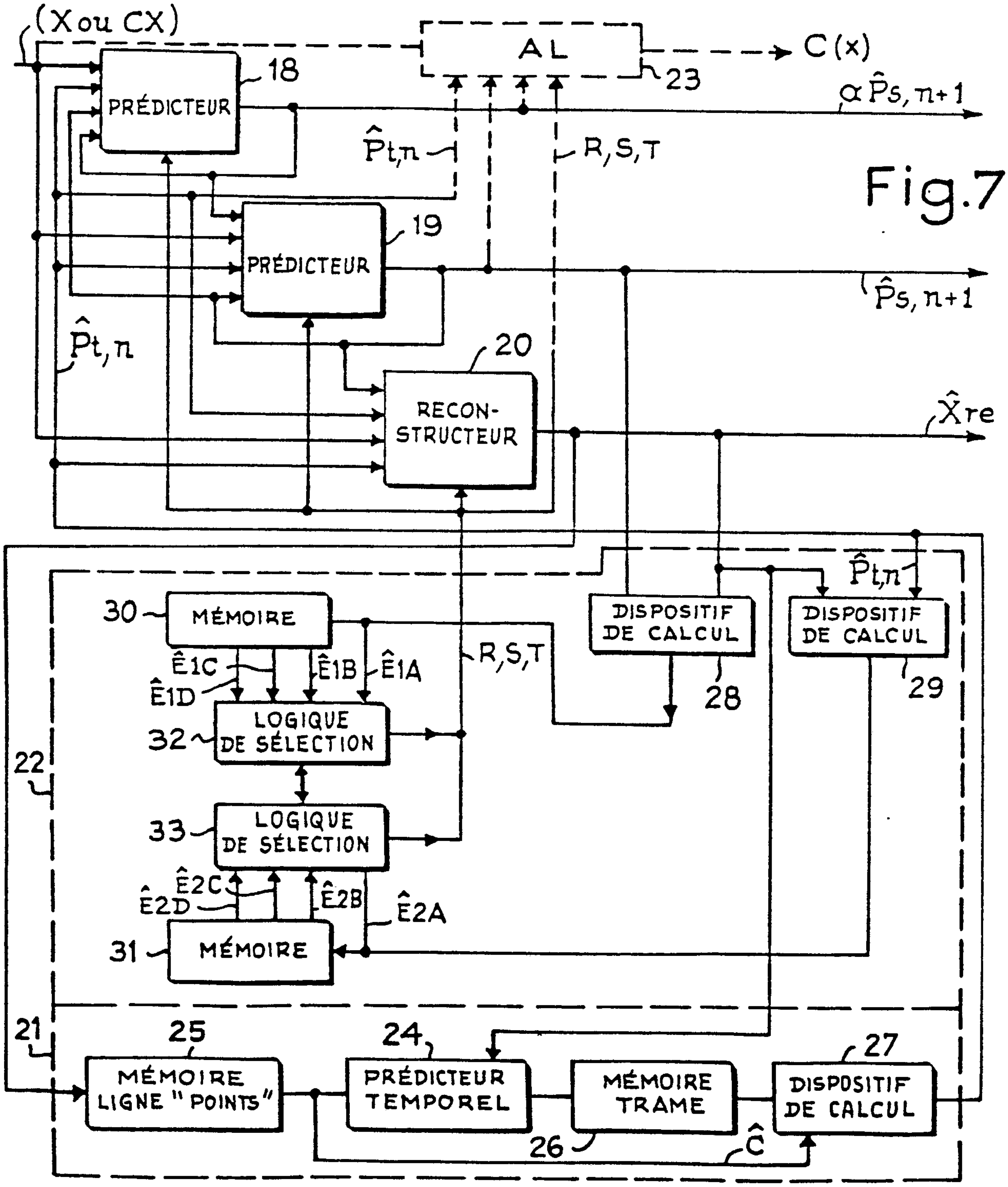


Fig.7

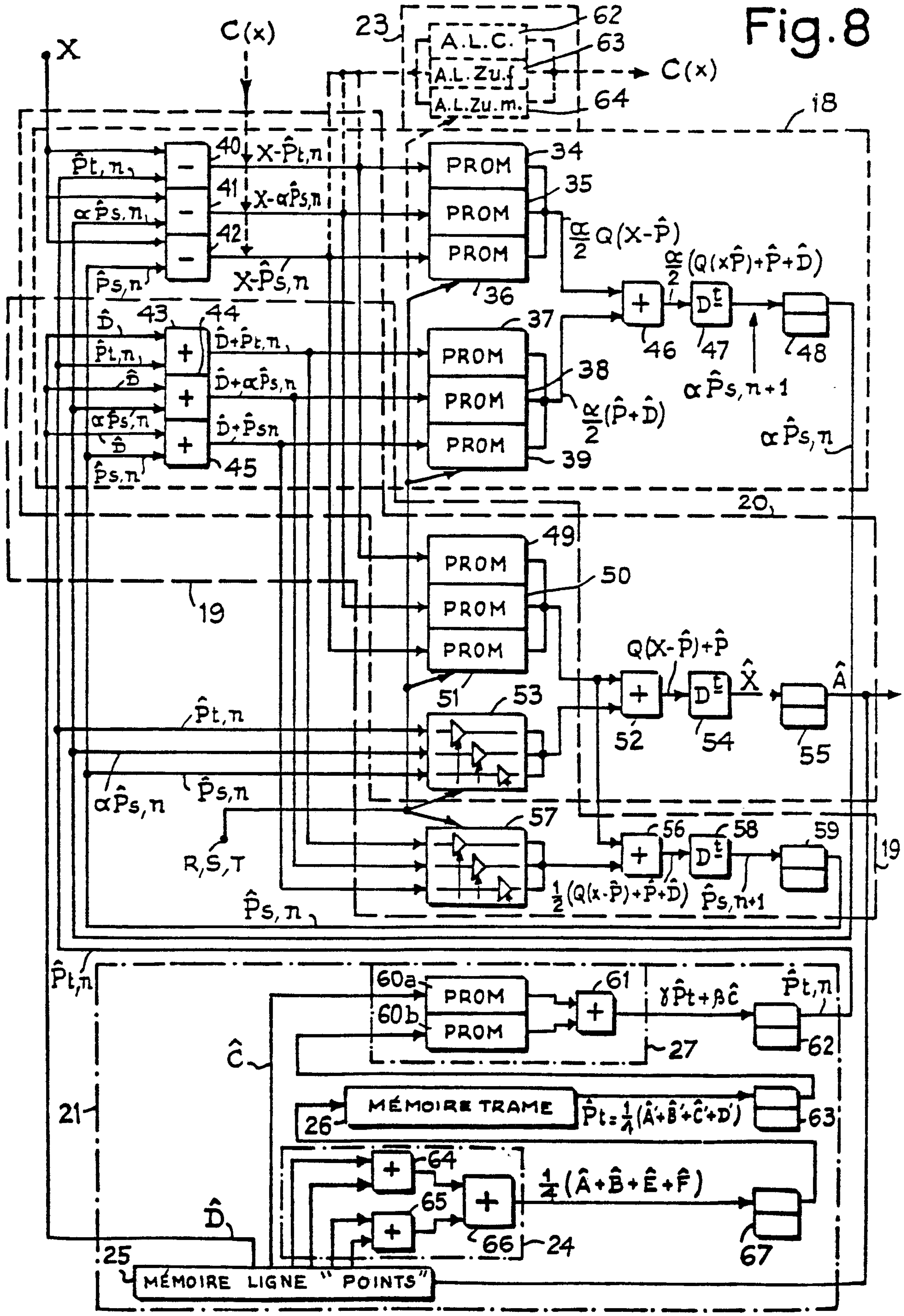
Fig.8
X
C(x)
A.L.C.
A.L.Zu.f
A.L.Zu.m.
C(x)
PROM
PROM
PROM
X-P̂t,n
X-αP̂s,n
X-P̂s,n
α/2 Q(X-P̂)
α/2 (Q(xP̂)+P̂+D̂)
αP̂s,n+1
α/2(P̂+D̂)
αP̂s,n
D̂+P̂t,n
D̂+αP̂s,n
D̂+P̂sn
Q(X-P̂)+P̂
X̂
Â
R,S,T
1/2(Q(x-P̂)+P̂+D̂)
P̂s,n+1
P̂s,n
P̂t,n
αP̂s,n
γP̂t+βĈ
Ĉ
MÉMOIRE TRAME
P̂t=1/4(Â'+B̂'+Ĉ'+D̂')
1/4(Â+B̂+Ê+F̂)
D̂
MÉMOIRE LIGNE "POINTS"

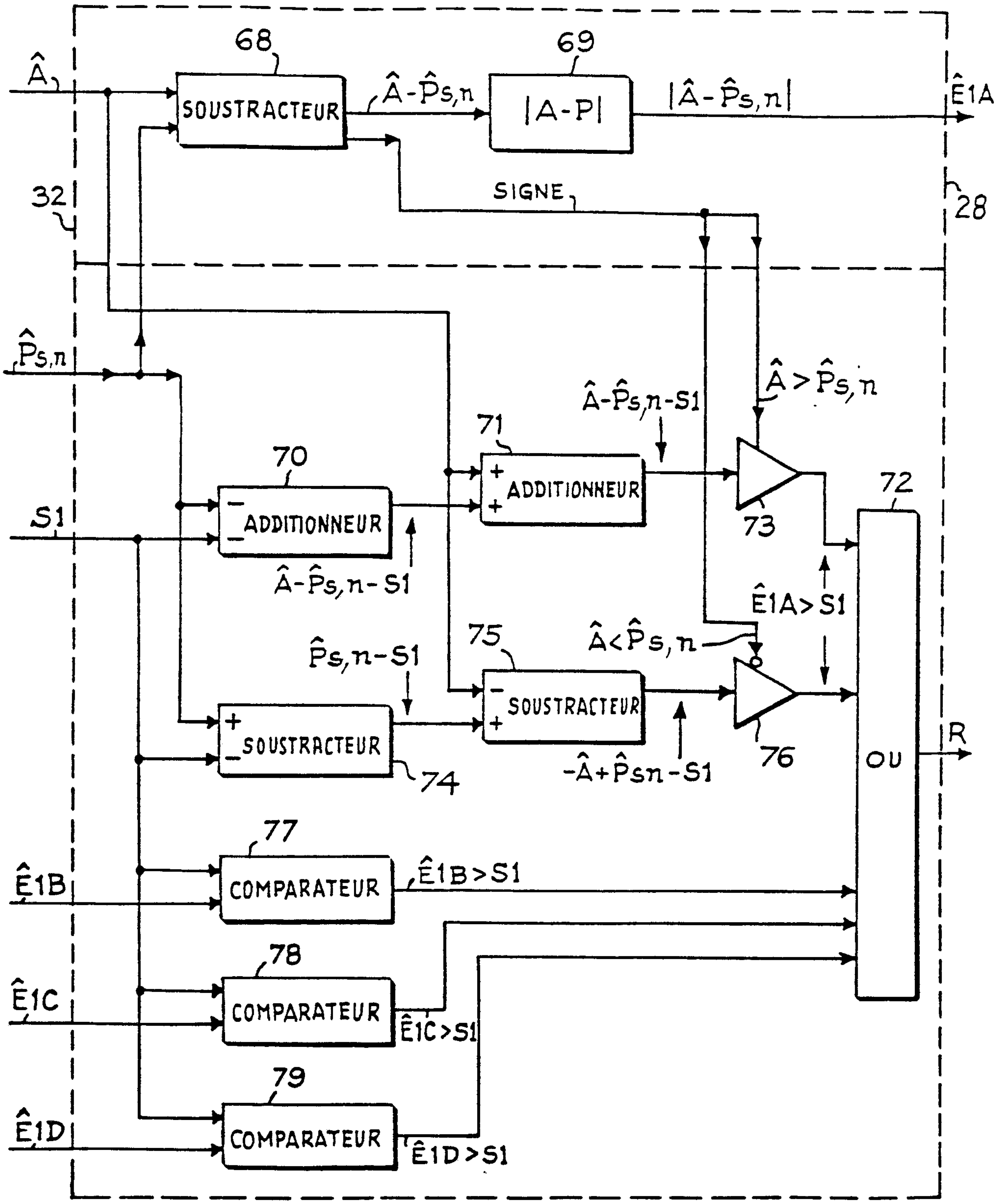
68
69
Â
SOUSTRACTEUR
Â-P̂s,n
|A-P|
|Â-P̂s,n|
Ê1A
32
SIGNE
28
P̂s,n
Â>P̂s,n
Â-P̂s,n-S1
71
70
ADDITIONNEUR
ADDITIONNEUR
72
S1
73
Â-P̂s,n-S1
Ê1A>S1
75
Â<P̂s,n
P̂s,n-S1
SOUSTRACTEUR
SOUSTRACTEUR
R
OU
74
-Â+P̂sn-S1
76
77
COMPARATEUR
Ê1B>S1
Ê1B
78
COMPARATEUR
Ê1C
Ê1C>S1
79
COMPARATEUR
Ê1D
Ê1D>S1

Fig.9